# EUROPEAN PATENT APPLICATION

(11) **EP 4 597 715 A1**
(43) Date of publication of application: **06.08.2025**
(21) Application number: 22961965.5
(22) Date of filing: 28.12.2022
(51) Int. Cl.: H01M 50/367, H01M 50/383

(54) **BATTERY AND ELECTRICAL APPARATUS**

(30) Priority: 12.10.2022 CN 202222686671 U
(71) Applicant: Contemporary Amperex Technology (Hong Kong) Limited, Central, Central And Western District (HK)
(72) Inventor: LIAO, Boxiang, Ningde, Fujian 352100 (CN); KE, Qingpeng, Ningde, Fujian 352100 (CN); WANG, Wei, Ningde, Fujian 352100 (CN); HUANG, Xiaoteng, Ningde, Fujian 352100 (CN); CHEN, Zhiming, Ningde, Fujian 352100 (CN)
(74) Representative: Gong, Jinping
(86) International application number: PCT/CN2022/142768
(87) International publication number: WO 2024/077787

(57) **Abstract**

This application relates to a battery (100) and an electrical device. The battery (100) includes: a shell structure (10); and a battery cell (20), including a pressure relief structure (24). The shell structure (10) includes a first sidewall (14) oriented toward the pressure relief structure (24). A part of the first sidewall (14) is recessed toward outside of the shell structure (10) to form a recessed structure (141). An orthographic projection of the pressure relief structure (24) toward the first sidewall (14) at least partially falls within the recessed structure (141). A part of the first sidewall (14) is recessed outward to form the recessed structure (141), and the orthographic projection of the pressure relief structure (24) toward the first sidewall (14) at least partially falls within the recessed structure (141), and therefore, a distance between the pressure relief structure (24) and the first sidewall (14) can be increased, and a cushion space (1411) between the pressure relief structure and the first sidewall (14) can be enlarged. In this way, when the pressure relief structure (24) relieves pressure, an instantaneous heat flow impact force can be cushioned in the cushion space (1411), thereby reducing a force exerted on the fireproof structure (40) and the shell structure (10), avoiding damage to the fireproof structure (40) and the shell structure (10), and eliminating a threat to the external environment.

## Description

### CROSS-REFERENCE TO RELATED APPLICATIONS

This application claims priority to Chinese Patent Application No. 202222686671.0, filed on October 12, 2022 and entitled "BATTERY AND ELECTRICAL DEVICE", which is incorporated herein by reference in its entirety.

### TECHNICAL FIELD

This application relates to the technical field of batteries, and in particular, to a battery and an electrical device.

### BACKGROUND

With the popularization of new energy vehicles, battery safety is attracting increasingly widespread attention from the society. As an important part of battery safety, thermal management safety is stepping into the spotlight of industry research.

A battery typically includes a battery module and a box. The battery module includes a plurality of battery cells arranged in groups. An explosion-proof valve is disposed on each battery cell. When a battery cell is thermally runaway, the explosion-proof valve bursts open. The impact of a heat flow makes a fireproof structure very prone to break. Consequently, the function of protecting the box cover of the battery is lost, and heat is not effectively prevented from diffusing outward, thereby posing a threat to the external environment.

### SUMMARY

In view of the above problem, this application provides a battery and an electrical device to alleviate the problem that the heat poses a threat to the external environment because the heat is unable to be effectively prevented from diffusing outward in a case of thermal runaway of a battery cell.

According to a first aspect, this application provides a battery, including:
a shell structure, including an accommodation cavity; and
a battery cell, including a pressure relief structure.

The shell structure includes a first sidewall oriented toward the pressure relief structure. A part of the first sidewall is recessed toward outside of the shell structure to form a recessed structure. An orthographic projection of the pressure relief structure toward the first sidewall at least partially falls within the recessed structure.

In the battery, a part of the first sidewall is recessed outward to form the recessed structure, and the orthographic projection of the pressure relief structure toward the first sidewall at least partially falls within the recessed structure, and therefore, a distance between the pressure relief structure and the first sidewall can be increased, and a cushion space between the pressure relief structure and the first sidewall can be enlarged. In this way, when the pressure relief structure relieves pressure, an instantaneous heat flow impact force can be cushioned in the cushion space, thereby reducing a force exerted on the fireproof structure and the shell structure, avoiding damage to the fireproof structure and the shell structure, and eliminating a threat to the external environment.

In some embodiments, an orthographic projection of the pressure relief structure toward the first sidewall falls entirely within the recessed structure.

In this way, the airflow impact force generated when the pressure relief structure relieves pressure entirely enters the cushion space of the recessed structure, thereby implementing full cushioning.

In some embodiments, a plurality of the battery cells are sequentially arranged along a first direction to form a battery assembly. The recessed structure extends along the first direction so that an orthographic projection of each pressure relief structure in the battery assembly toward the first sidewall at least partially falls within the recessed structure.

By setting the orthographic projection of each pressure relief structure in the battery assembly toward the first sidewall to at least partially fall within the recessed structure, and by letting the recessed structure extend along the first direction, the recessed spaces that each correspond a pressure relief structure communicate with each other to form a cushion space, thereby further increasing the volume of the cushion space, and improving the effect of cushioning the heat flow impact force generated when the pressure relief structure relieves pressure.

In some embodiments, the battery includes a plurality of the battery assemblies and a plurality of the recessed structures. All the recessed structures correspond one-to-one with all the battery assemblies, and the recessed structures are spaced apart from each other.

In this way, the cushion space of each recessed structure can cushion the heat flow impact forces generated by all the pressure relief structures of the battery assembly. At the same time, because the recessed structures are spaced apart from each other to form a concave-convex-alternated structure on the first sidewall, the effect of the recessed structure reinforcing the shell structure is not compromised.

In some embodiments, the shell structure includes an exhaust portion, and the recessed structure extends toward the exhaust portion.

By making the recessed structure extend toward the exhaust portion, when the pressure relief structure relieves pressure, the heat flow entering the recessed structure can be guided by the recessed structure to flow quickly to the exhaust portion to exhaust gas and relieve pressure, thereby preventing the gas from being trapped in the recessed structure so that the first sidewall is locally bulging and ruptured.

In some embodiments, the battery further includes a fireproof structure. The fireproof structure is disposed between the first sidewall and the battery cell.

By disposing the fireproof structure, the first sidewall is prevented from being directly punctured by the high-temperature gas or eroded by high-temperature eruptions generated when the pressure relief structure relieves pressure, and combustible gases and molten particles are prevented from directly contacting the external oxygen through cracks of the first sidewall and giving rise to a risk of combustion.

In some embodiments, an orthographic projection of the fireproof structure toward the first sidewall at least partially lies within the recessed structure.

By setting the orthographic projection of the fireproof structure toward the first sidewall to at least partially lie within the recessed structure, the fireproof structure can be arranged by fully utilizing the cushion space of the recessed structure, thereby preventing the arranged fireproof structure from further reducing the distance between the first sidewall and the pressure relief structure.

In some embodiments, in the recessed structure, the orthographic projection of the fireproof structure toward the first sidewall at least partially overlaps the orthographic projection of the pressure relief structure toward the first sidewall.

In this way, thermal runaway of the battery cell can be prevented more effectively by virtue of the dual effect of the recessed structure and the fireproof structure.

In some embodiments, the orthographic projection of the fireproof structure toward the first sidewall completely covers the recessed structure, and partially lies outside the recessed structure.

In this way, when the pressure relief structure relieves pressure, the heat flow rushes into the recessed structure. The high temperature of the heat flow rushing into the recessed structure can be resisted by the fireproof structure located inside the recessed structure. However, a part of the heat flow moves to the outside of the recessed structure under a reaction force. This part of heat flow is still resisted by the fireproof structure located outside the recessed structure, thereby improving the overall fireproof effect.

In some embodiments, an orthographic projection of the pressure relief structure toward the fireproof structure and the orthographic projection of the pressure relief structure toward the first sidewall form an overlap region in the recessed structure. A thickness of the fireproof structure in at least a part of the overlap region is greater than a thickness of the fireproof structure in other regions different from this part of region.

By thickening the fireproof structure in the overlap region, the fireproof performance of this part can be improved. In addition, other regions are not thickened, so that a relatively long distance is caused from other regions to the battery cell, thereby making it convenient to expel the heat flow.

In some embodiments, the orthographic projection of the pressure relief structure toward the first sidewall falls entirely within the orthographic projection of the fireproof structure toward the first sidewall.

In this way, comprehensive fire protection is performed against the impacting heat generated when the pressure relief structure relieves pressure, thereby improving the fireproof effect.

In some embodiments, a dimension of the fireproof structure is not less than 1.2 times a dimension of the pressure relief structure in a width direction of the recessed structure.

By setting the dimension of the fireproof structure to be not less than 1.2 times the dimension of the pressure relief structure in the width direction of the recessed structure, a high effect of the comprehensive fire protection can be further ensured, and the shell structure is prevented from being damaged by a large heat flow leaking out from the fireproof structure.

In some embodiments, the fireproof structure is attached to the first sidewall and is spaced apart from the battery cell.

By attaching the fireproof structure to the first sidewall, the method for fixing the fireproof structure against the shell structure is simplified, and the distance between the fireproof structure and the battery cell can be increased, so that the pressure can be cushioned before the pressure airflow reaches the fireproof structure.

In some embodiments, the fireproof structure includes at least one of a fireproof coating layer, a flexible fireproof layer, or a hard fireproof layer.

The fireproof coating layer, flexible fireproof layer, or hard fireproof layer are simple to produce and simple in structure, and the fireproof structure can be adjusted based on the fireproof requirements, exhaust requirements, the desired energy density of the battery, and the like.

The fireproof coating layer and the flexible fireproof layer is highly capable of adhering to the first sidewall to protect the first sidewall closely. The hard fireproof layer is of high rigidity to resist the heat flow impact force generated when the pressure relief structure relieves pressure.

In some embodiments, the flexible fireproof layer includes at least one of a ceramic fiber cloth fireproof layer, a high-silica-fiber cloth fireproof layer, a mica fireproof layer, or a ceramic silicone fireproof layer.

The ceramic fiber cloth fireproof layer, the high-silica-fiber cloth fireproof layer, the mica fireproof layer, and the ceramic silicone fireproof layer are of high flexibility, and can effectively cushion the heat flow impact force generated when the pressure relief structure relieves pressure.

In some embodiments, the hard fireproof layer includes at least one of a mica fireproof layer or a ceramic plastic fireproof layer.

The mica fireproof layer or the ceramic plastic fireproof layer can withstand high temperature and is highly resistant to impact, and can effectively prevent crack damage to the first sidewall in a case of thermal runaway.

In some embodiments, the shell structure is configured to be a box for accommodating the battery cell, and the recessed structure is formed on a box cover of the box; or the battery includes at least one battery assembly, the battery assembly includes at least two battery cells and a module housing, the shell structure is configured to be the module housing, and the recessed structure is formed on an end cap of the module housing.

In a case that the shell structure is used as a box, when the pressure relief structure of the battery cell relieves pressure, the heat flow impact force generated affects the whole box. Therefore, the disposed recessed structure can reduce the overall impact on the box. In a case that the shell structure is used as a module housing, when the pressure relief structure of the battery cell relieves pressure, the heat flow impact force generated only acts on the entire module housing. Therefore, the disposed recessed structure can reduce the impact on a single battery assembly, and avoid the impact on other battery assemblies in the battery and the impact on the entire battery.

According to a second aspect, this application provides an electrical device, including the battery disclosed in any one of the foregoing embodiments.

In the electrical device, a part of the first sidewall is recessed outward to form the recessed structure, and the orthographic projection of the pressure relief structure toward the first sidewall at least partially falls within the recessed structure, and therefore, a distance between the pressure relief structure and the first sidewall can be increased, and a cushion space between the pressure relief structure and the first sidewall can be enlarged. In this way, when the pressure relief structure relieves pressure, an instantaneous heat flow impact force can be cushioned in the cushion space, thereby reducing a force exerted on the fireproof structure and the shell structure, avoiding damage to the fireproof structure and the shell structure, and eliminating a threat to the external environment.

The foregoing description is merely an overview of the technical solutions of this application. Some specific embodiments of this application are described below illustratively to enable a clearer understanding of the technical solutions of this application, enable implementation of the technical solutions based on the subject-matter hereof, and make the foregoing and other objectives, features, and advantages of this application more evident and comprehensible.

### BRIEF DESCRIPTION OF DRAWINGS

By reading the following detailed description of exemplary embodiments, a person of ordinary skill in the art becomes clearly aware of various other advantages and benefits. The drawings are merely intended to illustrate the exemplary embodiments, but not to limit this application. In all the drawings, the same reference numeral represents the same component. In the drawings:
FIG. 1 is a schematic structural diagram of a vehicle according to some embodiments of this application;
FIG. 2 is an exploded view of a battery according to some embodiments of this application;
FIG. 3 is a schematic exploded view of a battery cell according to some embodiments of this application;
FIG. 4 is a bottom view of a first part of the battery shown in FIG. 2;
FIG. 5 is a top view of the battery shown in FIG. 2;
FIG. 6 is a cross-sectional schematic view of the battery shown in FIG. 5 sectioned along an A-A line; and
FIG. 7 is a close-up view of a part A of the battery shown in FIG. 6.

List of reference numerals:
vehicle 1000;
battery 100;
shell structure 10;
first part 11, second part 12, accommodation cavity 13, first sidewall 14, recessed structure 141, cushion space 1411, exhaust portion 16, second sidewall 17;
battery cell 20;
top cover 21, electrode terminal 211, housing 22, electrode assembly 23, tab 231, pressure relief structure 24;
battery assembly 30;
fireproof structure 40;
controller 200;
motor 300.

### DETAILED DESCRIPTION OF EMBODIMENTS

Some embodiments of the technical solutions of this application are described in detail below with reference to the drawings. The following embodiments are merely intended as examples to describe the technical solutions of this application more clearly, but not intended to limit the protection scope of this application.

Unless otherwise defined, all technical and scientific terms used herein bear the same meanings as what is normally understood by a person skilled in the technical field of this application. The terms used herein are merely intended to describe specific embodiments but not to limit this application. The terms "include" and "contain" and any variations thereof used in the specification, claims, and brief description of drawings of this application are intended as non-exclusive inclusion.

In the description of some embodiments of this application, the technical terms "first" and "second" are merely intended to distinguish between different items but not intended to indicate or imply relative importance or implicitly specify the number of the indicated technical features, specific order, or order of precedence. In the description of some embodiments of this application, unless otherwise expressly specified, "a plurality of" means two or more.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments.

In the description of embodiments of this application, the term "and/or" merely indicates a relationship between related items, and represents three possible relationships. For example, "1 and/or 2" may represent the following three circumstances: 1 alone, both 1 and 2, and 2 alone. In addition, the character "/" herein generally indicates an "or" relationship between the item preceding the character and the item following the character.

In the description of embodiments of this application, the term "a plurality of" means two or more (including two). Similarly, "a plurality of groups" means two or more groups (including two groups), and "a plurality of pieces" means two or more pieces (including two pieces).

In the description of embodiments of this application, a direction or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the drawings, and is merely intended for ease or brevity of description of embodiments of this application, but not intended to indicate or imply that the indicated device or component is necessarily located in the specified direction or constructed or operated in the specified direction. Therefore, such terms are not to be understood as a limitation on embodiments of this application.

In the description of this application, unless otherwise expressly specified and defined, the technical terms such as "mount", "concatenate", "connect", and "fix" are generic in a broad sense, for example, mean a fixed connection, a detachable connection, or a one-piece configuration; or mean a mechanical connection or an electrical connection; or mean a direct connection or an indirect connection implemented through an intermediary; or mean internal communication between two components or interaction between two components. A person of ordinary skill in the art can understand the specific meanings of the terms in some embodiments of this application according to specific situations.

The vigorous promotion of new energy vehicles by the authorities ushers in a great opportunity for the development of new energy vehicles. The safety and stability of vehicles have always been people's top concern. Thermal runaway of a battery cell brings enormous safety hazards, and is very prone to lead to thermal runaway of other battery cells in a battery, and ultimately cause the battery and the vehicle to catch fire and explode. Therefore, it is critical to prevent thermal diffusion of the battery.

A battery mainly includes a box and a plurality of battery cells. The plurality of battery cells are typically placed in groups in the box. Each battery cell includes an explosion-proof valve. The battery is typically mounted at the bottom of a vehicle. The explosion-proof valves of the battery cells are directly oriented toward the box cover and the passenger compartment. When the battery is abnormal, for example, when a battery cell is overcharged or extruded to a degree that triggers a thermal runaway, high temperature or high pressure makes the explosion-proof valve on the battery cell burst open, and the high-pressure heat flow impacts the box cover. After the box cover is destroyed, the heat in the thermally runaway battery cell poses a direct threat to the safety of the passenger compartment.

A conventional technical solution to preventing heat in a thermally runaway battery cell from posing a safety threat to the passenger compartment is: disposing a fireproof structure such as a mica plate between the box cover of the battery and the battery cell, so that when an explosion-proof valve of the battery cell is burst open by high temperature or high pressure, the fireproof structure prevents the heat in the battery cell from burning the box cover of the battery, so as to prevent heat transfer to the passenger compartment and improve the safety of the passenger compartment.

However, due to the fireproof structure added between the box cover and the battery cell, the space is compressed, and the distance between the fireproof structure and the explosion-proof valve is shortened. At the moment of bursting the explosion-proof valve open, the heat flow impact force is completely applied to the fireproof structure. Consequently, the fireproof structure is extremely prone to break and lose the function of protecting the box cover of the battery, thereby being unable to effectively prevent the heat from being transferred to the passenger compartment, and ultimately unable to effectively protect the safety of the passenger compartment.

In order to alleviate the problem of being unable to effectively prevent heat from diffusing outward when a battery cell is thermally runaway, a battery is designed. The battery includes a shell structure and a battery cell. The battery cell includes a pressure relief structure. The box includes a first sidewall oriented toward the pressure relief structure. A part of the first sidewall is recessed toward outside of the box to form a recessed structure. An orthographic projection of the pressure relief structure toward the first sidewall at least partially falls within the recessed structure.

In such a battery, a part of the first sidewall is recessed outward to form the recessed structure, and the orthographic projection of the pressure relief structure toward the first sidewall at least partially falls within the recessed structure, and therefore, a distance between the pressure relief structure and the first sidewall can be increased, and a cushion space between the pressure relief structure and the first sidewall can be enlarged. In this way, when the pressure relief structure relieves pressure, an instantaneous heat flow impact force can be cushioned in the cushion space, thereby reducing a force exerted on the fireproof structure and the shell structure, avoiding damage to the fireproof structure and the box, and eliminating a threat to the external environment.

The battery disclosed in some embodiments of this application is applicable to, but not limited to, electrical devices such as a vehicle, watercraft, or aircraft.

An embodiment of this application provides an electrical device powered by a battery. The electrical device may be, but is not limited to, a mobile phone, a tablet, a laptop computer, an electric toy, an electric tool, an electric power cart, an electric vehicle, a ship, a spacecraft, or the like. The electric toy may include stationary or mobile electric toys, such as a game console, an electric car toy, an electric ship toy, an electric airplane toy, and the like. The spacecraft may include an airplane, a rocket, a space shuttle, a spaceship, and the like.

For ease of description in the following embodiments, a vehicle 1000 is used as an example of the electrical device according to an embodiment of this application.

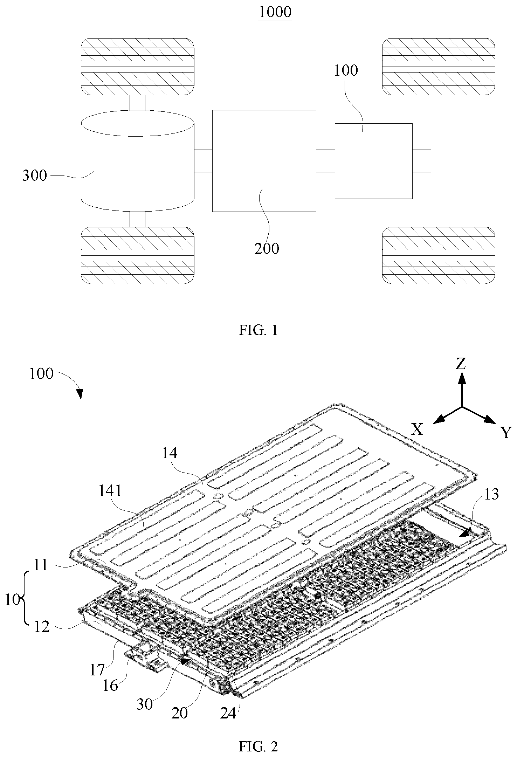

Referring to FIG. 1, FIG. 1 is a schematic structural diagram of a vehicle 1000 according to some embodiments of this application. The vehicle 1000 may be an oil-fueled vehicle, a natural gas vehicle, or a new energy vehicle. The new energy vehicle may be a battery electric vehicle, a hybrid electric vehicle, a range-extended electric vehicle, or the like. A battery 100 is disposed inside the vehicle 1000. The battery 100 may be disposed at the bottom, front, or rear of the vehicle 1000. The battery 100 may be configured to supply power to the vehicle 1000. For example, the battery 100 may serve as an operating power supply of the vehicle 1000. The vehicle 1000 may further include a controller 200 and a motor 300. The controller 200 is configured to control the battery 100 to supply power to the motor 300, for example, to meet electrical energy requirements in starting, navigating, or running the vehicle 1000.

In some embodiments of this application, the battery 100 serves not only as an operating power supply of the vehicle 1000, but may also serve as a driving power supply of the vehicle 1000 to provide driving power for the vehicle 1000 in place of or partly in place of fuel oil or natural gas.

Referring to FIG. 2, FIG. 2 is an exploded view of a battery 100 according to some embodiments of this application. The battery 100 includes a shell structure 10 and a battery cell 20. The battery cell 20 is accommodated in the shell structure 10. The shell structure 10 is configured to provide an accommodation space for the battery cell 20. The shell structure 10 may be various structures. In some embodiments, the shell structure 10 may include a first part 11 and a second part 12. The first part 11 and the second part 12 fit and cover each other. The first part 11 and the second part 12 together define an accommodation space configured to accommodate the battery cell 20. The second part 12 may be a hollow structure opened at one end. The first part 11 may be a plate-like structure. The first part 11 fits on an opening side of the second part 12 so that the first part 11 and the second part 12 together define the accommodation space. Alternatively, both the first part 11 and the second part 12 may be hollow structures opened at one side. The opening side of the first part 11 fits the opening side of the second part 12. Definitely, the shell structure 10 formed by the first part 11 and the second part 12 may be in various shapes, such as a cylinder or a cuboid. It is hereby noted that the first part 11 in embodiments of this application may serve as a box cover.

The battery 100 may contain a plurality of battery cells 20. The plurality of battery cells 20 may be connected in series, parallel, or series-and-parallel pattern. The series-and-parallel pattern means a combination of series connection and parallel connection of the plurality of battery cells 20. The plurality of battery cells 20 may be directly connected in series, parallel, or series-and-parallel pattern, and then the whole of the plurality of battery cells 20 may be accommodated in the shell structure 10. Alternatively, to make up a battery 100, the plurality of battery cells 20 may be connected in series, parallel, or series-and-parallel pattern to form a battery module first, and then a plurality of battery modules are connected in series, parallel, or series-and-parallel pattern to form a whole and accommodated in the shell structure 10. The battery 100 may further include other structures. For example, the battery 100 may further include a busbar component. The busbar component is configured to implement electrical connection between the plurality of battery cells 20.

Each battery cell 20 may be, but is not limited to, a secondary battery or primary battery; or, may be a lithium-sulfur battery, a sodium-ion battery, or a magnesium-ion battery. The battery cell 20 may be in a shape such as a cylinder, a flat body, a cuboid, or other shapes.

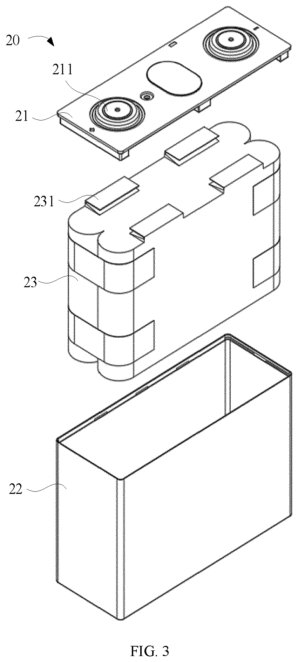

Referring to FIG. 3, FIG. 3 is a schematic structural exploded view of a battery cell 20 according to some embodiments of this application. The battery cell 20 is a minimum unit of a battery. As shown in FIG. 3, the battery cell 20 includes a top cover 21, a housing 22, an electrode assembly 23, and other functional components.

The top cover 21 is a component that fits and covers the opening of the housing 22 to isolate the internal environment of the battery cell 20 from the external environment. Without limitation, the shape of the top cover 21 may be adapted to the shape of the housing 22 to fit the housing 22. Optionally, the top cover 21 may be made of a material of appropriate hardness and strength (such as aluminum alloy), so that the top cover 21 is not prone to deform when squeezed or impacted. In this way, the battery cell 20 achieves higher structural strength and higher safety performance. Functional components such as electrode terminals 211 may be disposed on the top cover 21. The electrode terminal 211 may be configured to be electrically connected to the electrode assembly 23 to output or input electrical energy of the battery cell 20. In some embodiments, a pressure relief mechanism configured to release an internal pressure when the internal pressure or temperature of the battery cell 20 reaches a threshold may be further disposed on the top cover 21. The top cover 21 may also be made of a variety of materials such as copper, iron, aluminum, stainless steel, aluminum alloy, or plastic, and the materials are not particularly limited herein. In some embodiments, an insulator may be further disposed on an inner side of the top cover 21. The insulator may be configured to isolate an electrically connected component in the housing 22 from the top cover 21 to reduce short-circuit risks. For example, the insulator may be plastic, rubber, or the like.

The housing 22 is a component configured to fit the top cover 21 to form an internal environment of the battery cell 20. The formed internal environment may be used to accommodate the electrode assembly 23, an electrolyte solution, and other components. The housing 22 and the top cover 21 may be stand-alone components. An opening may be made on the housing 22. At the opening, the top cover 21 fits with the opening to form the internal environment of the battery cell 20. Without limitation, the top cover 21 and the housing 22 may be integrated instead. Specifically, the top cover 21 and the housing 22 may form a common connection interface before other components are put into the housing. Subsequently, when the interior of the housing 22 needs to be sealed, the top cover 21 is made to fit with the housing 22. The housing 22 may be in various shapes and sizes, such as a cuboid, cylinder, or hexagonal prism. Specifically, the shape of the housing 22 may be determined depending on the specific shape and size of the electrode assembly 23. The housing 22 may be made of a variety of materials such as copper, iron, aluminum, stainless steel, aluminum alloy, or plastic, without being particularly limited herein.

The electrode assembly 23 is a component that incurs electrochemical reactions in the battery cell 20. The housing 22 may contain one or more electrode assemblies 23. The electrode assembly 23 is primarily formed by winding or stacking a positive electrode plate and a negative electrode plate. A separator is generally disposed between the positive electrode plate and the negative electrode plate. The parts, coated with an active material, of the positive electrode plate and the negative electrode plate, constitute a body portion of the electrode assembly. The part, coated with no active material, of the positive electrode plate and the negative electrode plate separately, constitutes a tab 231. The positive tab and the negative tab may be located at one end of the body portion together or at two ends of the body portion respectively. In a charge-discharge process of the battery, the positive active material and the negative active material react with an electrolyte solution. The tabs 231 are connected to electrode terminals to form a current circuit.

According to some embodiments of this application, referring to FIG. 3, this application provides a battery 100. The battery 100 includes a shell structure 10 and a battery cell 20. The battery cell 20 includes a pressure relief structure 24. The shell structure 10 includes a first sidewall 14 oriented toward the pressure relief structure 24. A part of the first sidewall 14 is recessed toward the outside of the shell structure 10 to form a recessed structure 141. An orthographic projection of the pressure relief structure 24 toward the recessed structure 141 at least partially falls within the recessed structure 141.

The pressure relief structure 24 means a structure that is actuated to relieve pressure when the pressure reaches a preset value, so as to expel the gas and relieve the pressure.

Specifically, the pressure relief action can form a pressure relief port on the pressure relief structure 24. The gas on one side of the pressure relief structure 24 can be expelled from the pressure relief port to the other side. For example, the pressure relief structure 24 may be a thin-sheet pressure relief film fixed to the edge of the pressure relief port. Overpressure in the battery cell triggers a pressure relief action of the pressure relief film so that the pressure relief film is detached from the pressure relief port to fulfill the pressure relief function. Alternatively, the pressure relief structure 24 may be a nick pressure relief structure. Overpressure in the battery triggers a pressure relief action that the nick bursts open at the thinnest position, so as to relieve the pressure passively and fulfill the pressure relief function. Alternatively, the pressure relief structure 24 may be a puncture-type pressure relief structure with a plastic pressure relief pin. The form of the pressure relief structure is not limited herein.

Specifically, the pressure relief structure 24 is disposed on the top cover 21 of the battery cell 20.

It is hereby noted that the pressure relief structure 24 is either actuated directly under a pressure of the operating environment or actuated by a corresponding action of an electronic control structure, without limitation herein.

The first sidewall 14 oriented toward the pressure relief structure 24 means that the first sidewall 14 is disposed face-to-face toward the pressure relief structure 24. In an embodiment of this application, as shown in FIG. 2, the first sidewall 14 is disposed face-to-face toward the pressure relief structure 24 along a Z-direction. However, it is hereby noted that the first sidewall 14 is not necessarily parallel to the pressure relief structure 24, but may be at an appropriate inclination to the pressure relief structure, which still falls within the scope of protection of this application.

Specifically, the first sidewall 14 may be one of sidewalls of the first part 11 or one of sidewalls of the second part 12. However, the position of the first sidewall 14 closely correlates with the position of the pressure relief structure 24.

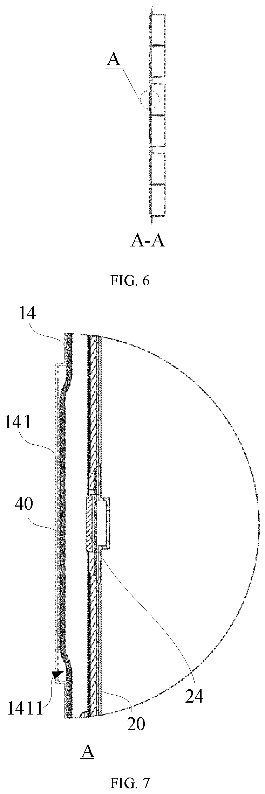

Referring to FIG. 7, a part of the first sidewall 14 is recessed toward the outside of the shell structure 10 to form a recessed structure 141, and, on a side oriented toward the pressure relief structure 24, provides a recessed space communicating with the pressure relief structure 24. The recessed space may be considered as a cushion space 1411 configured to cushion the heat flow impact force generated when the pressure relief structure 24 relieves pressure.

In this application, the shape and size of the cushion space 1411 is not limited. However, in order to simplify the process of molding the recessed structure 141 from the shell structure 10, the cushion space 1411 may be of a relatively regular shape, such as a rectangular or square shape, or may be of a hemisphere or triangular prism shape, without being particularly limited herein.

The orthographic projection of the pressure relief structure 24 toward the recessed structure 141 means a projection of the pressure relief structure 24 projected toward the recessed structure 141 along a direction perpendicular to the first sidewall 14, and specifically, means a projection of the pressure relief structure 24 toward the recessed structure 141 along the Z-direction shown in FIG. 2.

A part of the first sidewall 14 is recessed outward to form the recessed structure 141, and the orthographic projection of the pressure relief structure 24 toward the first sidewall 14 at least partially falls within the recessed structure 141, and therefore, a distance between the pressure relief structure 24 and the first sidewall 14 can be increased, and a cushion space 1411 between the pressure relief structure and the first sidewall 14 can be enlarged. In this way, when the pressure relief structure 24 relieves pressure, an instantaneous heat flow impact force can be cushioned in the cushion space 1411, thereby reducing a force exerted on the fireproof structure 40 and the shell structure 10, avoiding damage to the fireproof structure 40 and the shell structure 10, and eliminating a threat to the external environment.

According to some embodiments of this application, referring to FIG. 2, the orthographic projection of the pressure relief structure 24 toward the first sidewall 14 falls entirely within the recessed structure 141.

In this way, the airflow impact force generated when the pressure relief structure 24 relieves pressure entirely enters the cushion space 1411 of the recessed structure 141, thereby implementing full cushioning.

In some other embodiments, the orthographic projection of the pressure relief structure 24 toward the first sidewall 14 may fall partially within the recessed structure 141. For example, a half of the orthographic projection of the pressure relief structure 24 toward the first sidewall 141 falls within the recessed structure 141, without being particularly limited herein.

According to some embodiments of this application, referring to FIG. 7, a dimension of the recessed structure 141 is not less than 1.2 times a dimension of the pressure relief structure 24 in a width direction of the recessed structure 141.

Understandably, in the width direction of the recessed structure 141, the dimension of the recessed structure 141 is the width of the recessed structure 141. However, in the width direction of the recessed structure 141, the dimension of the pressure relief structure 24 are not necessarily the width of the pressure relief structure 24, but may be the length or another dimension, depending on the placement position of the battery cell 20 inside the shell structure 10 and the placement position of the pressure relief structure 24 in the battery cell 20. In some embodiments of this application, in the width direction of the recessed structure 141, the dimension of the pressure relief structure 24 is the length of the pressure relief structure 24. Specifically, the pressure relief structure 24 is elliptical. In the width direction of the recessed structure 141, the dimension of the pressure relief structure 24 is a long-axis dimension of the pressure relief structure 24. More specifically, the width direction of the recessed structure 141 is the Y-direction shown in FIG. 2.

By setting the dimension of the recessed structure 141 to be not less than 1.2 times the dimension of the pressure relief structure 24 in the width direction of the recessed structure 141, a high effect of the comprehensive cushioning can be further ensured, and a large heat flow impact force is prevented from leaking out from the recessed structure 141.

According to some embodiments of this application, referring to FIG. 2, a plurality of the battery cells 20 are sequentially arranged along a first direction to form a battery assembly 30. The recessed structure 141 extends along the first direction so that an orthographic projection of each pressure relief structure 24 of the battery assembly 30 toward the first sidewall at least partially falls within the recessed structure 141.

The first direction referred to herein is the X-direction shown in FIG. 2.

By setting the orthographic projection of each pressure relief structure 24 of the battery assembly 30 toward the first sidewall to at least partially fall within the recessed structure 141, and by letting the recessed structure 141 extend along the first direction, the recessed spaces that each correspond to a pressure relief structure 24 communicate with each other to form a cushion space 1411, thereby further increasing the volume of the cushion space 1411, and improving the effect of cushioning the heat flow impact force generated when the pressure relief structure 24 relieves pressure.

According to some embodiments of this application, referring to FIG. 2, the battery includes a plurality of battery assemblies 30 and a plurality of recessed structures 141. All the recessed structures 141 correspond one-to-one with all the battery assemblies 30. The recessed structures 141 are spaced apart from each other.

"All the recessed structures 141 correspond one-to-one with all the battery assemblies 30" means that each recessed structure 141 corresponds to one battery assembly 30. "Each recessed structure 141 corresponds to one battery assembly 30" means that the orthographic projection of each pressure relief structure 24 of the battery assembly 30 toward the first sidewall at least partially falls within the corresponding recessed structure 141.

In this way, the cushion space 1411 of each recessed structure 141 can cushion the heat flow impact forces generated by all the pressure relief structures 24 of the battery assembly 30. At the same time, because the recessed structures 141 are spaced apart from each other to form a concave-convex-alternated structure on the first sidewall 14, the effect of the recessed structure 141 reinforcing the shell structure 10 is not compromised.

In addition, the spacing between two adjacent recessed structures 141 can serve the purpose of avoidance holes on typical shell structures 10 without compromising the performance of the shell structure 10.

According to some embodiments of this application, referring to FIG. 2, the shell structure 10 includes an exhaust portion 16. The recessed structure 141 extends toward the exhaust portion 16.

The extending of the recessed structure 141 toward the exhaust portion 16 does not necessarily mean that the recessed structure 141 extends until getting connected to the exhaust portion 16, but may be at a distance apart. Furthermore, the extension line of the recessed structure 141 does not necessarily pass through the exhaust portion 16, but may mean that the recessed structure extends roughly toward the exhaust portion 16.

By making the recessed structure 141 extend toward the exhaust portion 16, when the pressure relief structure 24 relieves pressure, the heat flow entering the recessed structure 141 can be guided by the recessed structure 141 to flow quickly to the exhaust portion 16 to exhaust gas and relieve pressure, thereby preventing the gas from being trapped in the recessed structure 141 so that the first sidewall 14 is locally bulging and ruptured.

Optionally, the exhaust portion 16 may expel the heat flow at any time, or the pressure accumulates to a specified degree before being released in a centralized manner, without being particularly limited herein.

Specifically, the exhaust portion 16 may be just an exhaust port, or may be an exhaust valve or the like.

In an embodiment of this application, the exhaust portion 16 is disposed on one side of the shell structure 10 along a direction parallel to the first sidewall 14. More specifically, the exhaust portion 16 is disposed on a second sidewall 17 of the second part 12 on a side along a direction parallel to the first sidewall 14. The recessed structure 141 may extend along a direction perpendicular to the second sidewall 17.

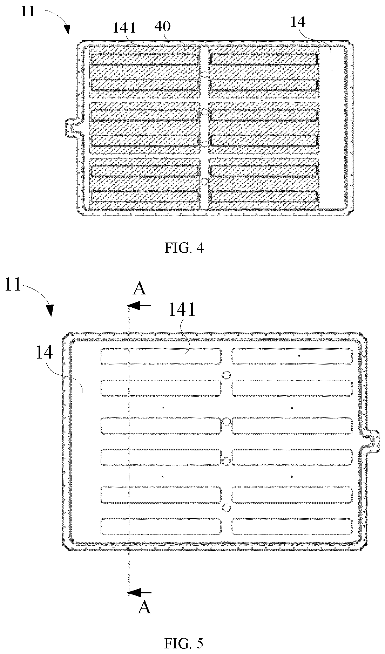

According to some embodiments of this application, referring to FIG. 2 and FIG. 4, the battery 100 further includes a fireproof structure 40. The fireproof structure 40 is disposed between the first sidewall 14 and the battery cell 20.

By disposing the fireproof structure 40, the first sidewall 14 is prevented from being directly punctured by the high-temperature gas or eroded by high-temperature eruptions generated when the pressure relief structure 24 relieves pressure, and combustible gases and molten particles are prevented from directly contacting the external oxygen through cracks of the first sidewall 14 and giving rise to a risk of combustion.

According to some embodiments of this application, referring to FIG. 2 and FIG. 4, the orthographic projection of the fireproof structure 40 toward the first sidewall 14 at least partially lies within the recessed structure 141.

The orthographic projection of the fireproof structure 40 toward the first sidewall 14 means a projection of the fireproof structure 40 projected toward the first sidewall 14 along a direction perpendicular to the first sidewall 14.

By setting the orthographic projection of the fireproof structure 40 toward the first sidewall 14 to at least partially lie within the recessed structure 141, the fireproof structure 40 can be arranged by fully utilizing the cushion space 1411 of the recessed structure 141, thereby preventing the arranged fireproof structure 40 from further reducing the distance between the first sidewall 14 and the pressure relief structure 24.

According to some embodiments of this application, referring to FIG. 2, FIG. 4, and FIG. 7, in the recessed structure 141, the orthographic projection of the pressure relief structure 24 toward the fireproof structure 40 at least partially overlaps the orthographic projection of the pressure relief structure 24 toward the first sidewall 14.

In this way, thermal runaway of the battery cell 20 can be prevented more effectively by virtue of the dual effect of the recessed structure 141 and the fireproof structure 40.

Optionally, in the recessed structure 141, the orthographic projection of the pressure relief structure 24 toward the fireproof structure 40 completely overlaps the orthographic projection of the pressure relief structure 24 toward the first sidewall 14.

According to some embodiments of this application, referring to FIG. 4, the orthographic projection of the fireproof structure 40 toward the first sidewall 14 completely covers the recessed structure 141, and partially lies outside the recessed structure 141.

In this way, when the pressure relief structure 24 relieves pressure, the heat flow rushes into the recessed structure 141. The high temperature of the heat flow rushing into the recessed structure 141 can be resisted by the fireproof structure 40 located inside the recessed structure 141. However, a part of the heat flow moves to the outside of the recessed structure 141 under a reaction force. This part of heat flow is still resisted by the fireproof structure 40 located outside the recessed structure 141, thereby improving the overall fireproof effect.

Optionally, when the battery 100 includes a plurality of battery assemblies 30, the orthographic projection of the fireproof structure 40 toward the first sidewall 14 completely covers the recessed structures 141 corresponding to two adjacent battery assemblies 30. Further, the battery may include a plurality of fireproof structures 40. The orthographic projection of each fireproof structure 40 toward the first sidewall 14 completely covers the recessed structures 141 corresponding to two adjacent battery assemblies 30.

In an embodiment of this application, at least two adjacent battery assemblies 30 combine into one battery module. The orthographic projection of the fireproof structure 40 toward the first sidewall 14 completely covers the recessed structure 141 corresponding to one battery module.

According to some embodiments of this application, referring to FIG. 2, FIG. 4, and FIG. 7, the orthographic projection of the pressure relief structure 24 toward the fireproof structure 40 and the orthographic projection of the pressure relief structure 24 toward the first sidewall 14 form an overlap region in the recessed structure 141. A thickness of the fireproof structure 40 in at least a part of the overlap region is greater than a thickness of the fireproof structure 40 in other regions different from this part of region.

By thickening the fireproof structure 40 in the overlap region, the fireproof performance of this part can be improved. In addition, other regions are not thickened, so that a relatively long distance is caused from other regions to the battery cell 20, thereby making it convenient to expel the heat flow.

Optionally, the overlap region includes a first region. The thickness of the fireproof structure 40 in the first region is greater than the thickness of the fireproof structure 40 in other regions different from the first region in the overlap region, and may also be greater than the thickness of the fireproof structure 40 in non-overlapping regions.

According to some embodiments of this application, referring to FIG. 2, FIG. 4, and FIG. 7, the orthographic projection of the pressure relief structure 24 toward the first sidewall 14 falls entirely within the orthographic projection of the fireproof structure 40 toward the first sidewall 14.

In this way, comprehensive fire protection is performed against the impacting heat generated when the pressure relief structure 24 relieves pressure, thereby improving the fireproof effect.

According to some embodiments of this application, referring to FIG. 7, a dimension of the fireproof structure 40 is not less than 1.2 times a dimension of the pressure relief structure 24 in the width direction of the recessed structure 141.

By setting the dimension of the fireproof structure 40 to be not less than 1.2 times the dimension of the pressure relief structure 24 in the width direction of the recessed structure 141, a high effect of the comprehensive fire protection can be further ensured, and the shell structure 10 is prevented from being damaged by a large heat flow leaking out from the fireproof structure 40.

According to some embodiments of this application, referring to FIG. 2, FIG. 4, and FIG. 7, the fireproof structure 40 is attached to the first sidewall 14 and is spaced apart from the battery cell 20.

By attaching the fireproof structure 40 to the first sidewall 14, the method for fixing the fireproof structure 40 against the shell structure 10 is simplified, and the distance between the fireproof structure and the battery cell 20 can be increased, so that the pressure can be cushioned before the pressure airflow reaches the fireproof structure 40.

According to some embodiments of this application, the fireproof structure 40 includes at least one of a fireproof coating layer, a flexible fireproof layer, or a hard fireproof layer.

The fireproof coating layer, flexible fireproof layer, or hard fireproof layer are simple to produce and simple in structure, and the fireproof structure 40 can be adjusted based on the fireproof requirements, exhaust requirements, the desired energy density of the battery 100, and the like.

The fireproof coating layer and the flexible fireproof layer is highly capable of adhering to the first sidewall 14 to protect the first sidewall 14 closely. The hard fireproof layer is of high rigidity to resist the heat flow impact force generated when the pressure relief structure 24 relieves pressure.

Optionally, the fireproof structure 40 may include a laminated structure of at least two of a fireproof coating layer, a flexible fireproof layer, or a hard fireproof layer.

According to some embodiments of this application, the flexible fireproof layer includes at least one of a ceramic fiber cloth fireproof layer, a high-silica-fiber cloth fireproof layer, a mica fireproof layer, or a ceramic silicone fireproof layer.

The ceramic fiber cloth fireproof layer, the high-silica-fiber cloth fireproof layer, the mica fireproof layer, and the ceramic silicone fireproof layer are of high flexibility, and can effectively cushion the heat flow impact force generated when the pressure relief structure 24 relieves pressure.

According to some embodiments of this application, the hard fireproof layer includes at least one of a mica fireproof layer or a ceramic plastic fireproof layer.

The mica fireproof layer or the ceramic plastic fireproof layer can withstand high temperature and is highly resistant to impact, and can effectively prevent crack damage to the first sidewall 14 in a case of thermal runaway.

According to some embodiments of this application, the shell structure 10 is configured to be a box for accommodating the battery cell 20. The recessed structure 141 is formed on a box cover of the box.

In a case that the shell structure 10 is used as a box, when the pressure relief structure 24 of the battery cell 20 relieves pressure, the heat flow impact force generated affects the whole box. Therefore, the disposed recessed structure 141 can reduce the overall impact on the box.

According to some embodiments of this application, the battery 100 includes at least one battery assembly 30. The battery assembly includes at least two battery cells 20 and a module housing. The shell structure 10 is configured to be the module housing. The recessed structure is formed on an end cap of the module housing.

In a case that the shell structure 10 is used as a module housing, when the pressure relief structure 24 of the battery cell 20 relieves pressure, the heat flow impact force generated only acts on the entire module housing. Therefore, the disposed recessed structure 141 can reduce the impact on a single battery assembly 30, and avoid the impact on other battery assemblies 30 in the battery 100 and the impact on the entire battery 100.

According to some embodiments of this application, this application further provides an electrical device. The electrical device includes the battery 100 disclosed in any one of the above embodiments.

A part of the first sidewall 14 is recessed outward to form the recessed structure 141, and the orthographic projection of the pressure relief structure 24 toward the first sidewall 14 at least partially falls within the recessed structure 141, and therefore, a distance between the pressure relief structure 24 and the first sidewall 14 can be increased, and a cushion space 1411 between the pressure relief structure and the first sidewall 14 can be enlarged. In this way, when the pressure relief structure 24 relieves pressure, an instantaneous heat flow impact force can be cushioned in the cushion space 1411, thereby reducing a force exerted on the fireproof structure 40 and the shell structure 10, avoiding damage to the fireproof structure 40 and the shell structure 10, and eliminating a threat to the external environment.

According to some embodiments of this application, referring to FIG. 2 and FIG. 4 to FIG. 7, this application provides a battery 100. The battery 100 includes a shell structure 10 and a plurality of battery assemblies 30. Each battery assembly 30 includes a plurality of battery cells 20 arranged along the first direction. The shell structure 10 includes an accommodation cavity 13. The plurality of battery assemblies 30 are accommodated in the accommodation cavity 13. A pressure relief structure 24 is disposed on the top cover 21 of each battery cell 20. The shell structure 10 includes a first sidewall 14 oriented toward the pressure relief structure 24. A part of the first sidewall 14 is recessed toward the outside of the shell structure 10 to form a recessed structure 141. The battery includes a plurality of recessed structures 141. All the recessed structures 141 correspond one-to-one with all the battery assemblies 30. The recessed structures 141 are spaced apart from each other. An orthographic projection of each pressure relief structure 24 of each battery assembly 30 toward the recessed structure 141 falls entirely within the recessed structure 141. The shell structure 10 includes an exhaust portion 16. Each recessed structure 141 extends toward a second sidewall 17 on which the exhaust portion 16 is located. The first sidewall 14 is perpendicular to the second sidewall 17. The battery 100 further includes a fireproof structure 40. The fireproof structure 40 is attached to the first sidewall 14, and is spaced apart from the battery cell 20. The orthographic projection of the fireproof structure 40 toward the first sidewall 14 completely covers the recessed structure 141, and partially lies outside the recessed structure 141. A dimension of the fireproof structure 40 is not less than 1.2 times a dimension of the pressure relief structure 24 in a width direction of the recessed structure 141. An orthographic projection of the pressure relief structure 24 toward the fireproof structure 40 and the orthographic projection of the pressure relief structure 24 toward the first sidewall 14 form an overlap region in the recessed structure 141. A thickness of the fireproof structure 40 in at least a part of the overlap region is greater than a thickness of the fireproof structure 40 in other regions different from this part of region.

Finally, it is hereby noted that the foregoing embodiments are merely intended to describe the technical solutions of this application but not to limit this application. Although this application has been described in detail with reference to the foregoing embodiments, a person of ordinary skill in the art understands that modifications may still be made to the technical solutions described in the foregoing embodiments, or equivalent replacements may still be made to some or all technical features in the technical solutions. Such modifications and equivalent replacements fall within the scope of the claims and specification hereof without making the essence of the corresponding technical solutions depart from the scope of the technical solutions of the embodiments of this application. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. A battery, **characterized in that** the battery comprises:
a shell structure; and
a battery cell, comprising a pressure relief structure, wherein
the shell structure comprises a first sidewall oriented toward the pressure relief structure, a part of the first sidewall is recessed toward outside of the shell structure to form a recessed structure, and an orthographic projection of the pressure relief structure toward the first sidewall at least partially falls within the recessed structure.

2. The battery according to claim 1, **characterized in that** an orthographic projection of the pressure relief structure toward the first sidewall falls entirely within the recessed structure.

3. The battery according to claim 1 or 2, **characterized in that** a plurality of the battery cells are sequentially arranged along a first direction to form a battery assembly, and the recessed structure extends along the first direction so that an orthographic projection of each pressure relief structure in the battery assembly toward the first sidewall at least partially falls within the recessed structure.

4. The battery according to claim 3, **characterized in that** the battery comprises a plurality of the battery assemblies and a plurality of the recessed structures, all the recessed structures correspond one-to-one with all the battery assemblies, and the recessed structures are spaced apart from each other.

5. The battery according to any one of claims 1 to 4, **characterized in that** the shell structure comprises an exhaust portion, and the recessed structure extends toward the exhaust portion.

6. The battery according to any one of claims 1 to 5, **characterized in that** the battery further comprises a fireproof structure, and the fireproof structure is disposed between the first sidewall and the battery cell.

7. The battery according to claim 6, **characterized in that** an orthographic projection of the fireproof structure toward the first sidewall at least partially lies within the recessed structure.

8. The battery according to claim 7, **characterized in that**, in the recessed structure, the orthographic projection of the fireproof structure toward the first sidewall at least partially overlaps the orthographic projection of the pressure relief structure toward the first sidewall.

9. The battery according to claim 8, **characterized in that** the orthographic projection of the fireproof structure toward the first sidewall completely covers the recessed structure, and partially lies outside the recessed structure.

10. The battery according to claim 8 or 9, **characterized in that** an orthographic projection of the pressure relief structure toward the fireproof structure and the orthographic projection of the pressure relief structure toward the first sidewall form an overlap region in the recessed structure, and a thickness of the fireproof structure in at least a part of the overlap region is greater than a thickness of the fireproof structure in other regions different from this part of region.

11. The battery according to any one of claims 8 to 10, **characterized in that** the orthographic projection of the pressure relief structure toward the first sidewall falls entirely within the orthographic projection of the fireproof structure toward the first sidewall.

12. The battery according to claim 11, **characterized in that** a dimension of the fireproof structure is not less than 1.2 times a dimension of the pressure relief structure in a width direction of the recessed structure.

13. The battery according to any one of claims 6 to 12, **characterized in that** the fireproof structure is attached to the first sidewall and is spaced apart from the battery cell.

14. The battery according to claim 13, **characterized in that** the fireproof structure comprises at least one of a fireproof coating layer, a flexible fireproof layer, or a hard fireproof layer.

15. The battery according to claim 14, **characterized in that** the flexible fireproof layer comprises at least one of a ceramic fiber cloth fireproof layer, a high-silica-fiber cloth fireproof layer, a mica fireproof layer, or a ceramic silicone fireproof layer.

16. The battery according to claim 14 or 15, **characterized in that** the hard fireproof layer comprises at least one of a mica fireproof layer or a ceramic plastic fireproof layer.

17. The battery according to any one of claims 1 to 16, **characterized in that** the shell structure is configured to be a box for accommodating the battery cell, and the recessed structure is formed on a box cover of the box; or
the battery comprises at least one battery assembly, the battery assembly comprises at least two battery cells and a module housing, the shell structure is configured to be the module housing, and the recessed structure is formed on an end cap of the module housing.

18. An electrical device, **characterized in that** the electrical device comprises the battery according to any one of claims 1 to 17.
